# EUROPÄISCHE PATENTANMELDUNG

(11) **EP 3 483 486 A1**
(43) Veröffentlichungstag der Anmeldung: **15.05.2019**
(21) Anmeldenummer: 18199096.1
(22) Anmeldetag: 08.10.2018
(51) Int. Cl.: F16K 11/074, F16K 11/20, F16K 27/04, B60G 17/052, B60G 99/00, B62D 33/06, F15B 13/07, F15B 13/04

(54) **DRUCKMITTELVERSORUNGSEINRICHTUNG**

(30) Priorität: 10.11.2017 DE 102017220090
(71) Anmelder: ZF Friedrichshafen AG, 88046 Friedrichshafen (DE)
(72) Erfinder: Nowotka, Thomas, 97494 Bundorf (DE); Memmel, Alfred, 97453 Schonungen (DE); Memmel, Georg, 97422 Schweinfurt (DE)

(57) **Zusammenfassung**

Druckmittelversorgungseinrichtung, umfassend eine Anzahl von Ventilen, die über Verbindungsleitungen in die Druckmittelversorgungseinrichtung eingebunden sind, dadurch gekennzeichnet, wobei zwei getrennt schaltbare Ventile in einem gemeinsamen Gehäuse angeordnet sind.

## Beschreibung

Die Erfindung betrifft eine Druckmittelversorgungseinrichtung gemäß dem Oberbegriff von Patentanspruch 1.

Bei einer Druckmittelversorgungseinrichtung, z. B. für ein Fahrwerk oder eine Kabinenlagerung, werden die einzelnen Komponenten von verschiedenen Herstellern zugeliefert und bei der Montage an einem vorgesehenen Platz befestigt. Teilweise ist eine Druckmittelversorgungseinrichtung Bestandteil eines aktiven Systems, das vielfach als eine Ausstattungsoption angeboten wird. Folglich besteht ein deutlicher Montageaufwand zwischen einem einfachen passiven System, wie einer mechanischen Kabinenlagerung, und einer aktiven geregelten Kabinenlagerung. Beide Systeme müssen jedoch häufig auf einer Fertigungslinie montierbar sein.

Die Aufgabe der vorliegenden Erfindung besteht darin, eine Druckmittelversorgungseinrichtung weiterzuentwickeln, um den Montageaufwand zu minimieren.

Diese Aufgabe wird dadurch gelöst, dass mindestens zwei getrennt schaltbare Ventile in einem gemeinsamen Gehäuse angeordnet sind.

Der Vorteil besteht darin, dass über die einfache Montage des Gehäuses wesentliche Komponenten der Druckmittelversorgungseinrichtungen am Fahrzeug montiert sind. Das Gehäuse mit den Ventilen kann völlig unabhängig montiert und vorbereitet werden, so dass eine schnelle Montage am Fahrzeug möglich ist.

In weiterer vorteilhafter Ausgestaltung verläuft mindestens eine Verbindungsleitung zwischen den Ventilen innerhalb einer Wandstruktur des Gehäuses. Man kann auf Druckmittelschläuche im Gehäuse verzichten. Dadurch wird die Montage der Baugruppe nochmals vereinfacht und die Betriebssicherheit erhöht, da z.B. kein Schlauch platzen kann.

Eine weitere Ausbaustufe des Gehäuses zeichnet sich dadurch aus, dass das Gehäuse eine Aufnahme für ein Steuergerät aufweist. Damit ist die Elektronik nicht nur bestens geschützt, sondern die Verbindungswege zu den Ventilen sind denkbar kurz.

Im Hinblick auf eine kompakte und einfache Bauform ist mindestens ein Ventil als ein Drehschieberventil ausgeführt und das Gehäuse weist einen Achsträger für das Drehschieberventil auf. Der Achsträger wird von einem Hohlprofil gebildet, das wiederum mit den Wandungsteilen verbunden ist. Dadurch ergibt sich eine sehr steife Gehäusestruktur.

Bevorzugt sind beide Ventile als Drehschieberventile ausgeführt und weisen einen gemeinsamen Achsträger auf. Dann ist das Hohlprofil vereinfacht als ein Rohrkörper geformt. Das Gehäuse besteht aus einem urformbaren Werkstoff, mit dem sich das Hohlprofil ausreichend exakt ausführen lässt.

In dem der Achsträger ist ein Ventilträger des schaltbaren Ventils gelagert. Der Ventilträger stellt das bewegliche Bauteil des schaltbaren Ventils dar. Das Ventil verfügt über kein weiteres Gehäuse, das die einzelnen Ventilkomponenten aufnimmt.

Der Ventilträger weist mehrere Schaltbereiche für verschiedene Ventile auf. Dadurch kann man ein Standardbauteil als Ventilträger verwenden, wobei für eine bestimmte Ventilfunktion eines der Schaltbereiche eingesetzt wird.

Mindestens ein Wandungsbereich des Gehäuses bildet mit dem Ventilträger ein Schieberventil. Die Schieberventilbauweise fördert die Verbindung von gehäuseseitigen Wandbereichen und z. B. den beweglichen Ventilteilen, indem man die Schieberventilbauteile einfach aufeinander gleiten lässt.

In weiterer vorteilhafter Ausgestaltung weist der Ventilträger ein Übertragungsprofil für einen E-Motor aufweist. Bevorzugt verfügt der Ventilträger über eine Aufnahme mit einem Keilprofil für die Motorwelle. Auch hier genügt eine einfache Steckverbindung zwischen dem E-Motor und dem Ventilträger.

In einer weiteren Ausbaustufe weist dass das Gehäuse eine Aufnahme für ein Druckerzeugungsaggregat auf. Der Energiebedarf kann auch von einem relativ kleinen Kompressor oder einer kleinen Pumpe erfüllt werden, so dass die Bauraumanforderung realisierbar sind.

Der Einsatz eines im Gehäuse angeordneten Druckerzeugungsaggregats soll die weitere Ausgestaltung der Verbindungsleitung im Gehäuse nicht beeinflussen. Deshalb weist die Aufnahme einen Verbindungskanal zu einem Druckmitteleingangsanschluss des Gehäuses auf. Dieser Druckmitteingangsanschluss wird auch bei einem externen Druckerzeugungsaggregat genutzt.

Bevorzugt weist dass das Gehäuse zwei endseitige Deckel auf. Diese Bauweise fördert die Herstellung des Gehäuses in einem Urform-Prozess, z. B. eine Spritzverfahren für ein Gehäuse aus Kunststoff.

Gemäß einem vorteilhaften Unteranspruch ist die Aufnahme für das Druckerzeugungsaggregat im Deckel ausgeführt. Der Deckel lässt sich einfach austauschen, so dass das Gehäuse mit einem externen oder mit einem internen Druckerzeugungsaggregat kombiniert werden kann.

Anhand der folgenden Figurenbeschreibung soll die Erfindung näher erläutert werden.

Es zeigt:

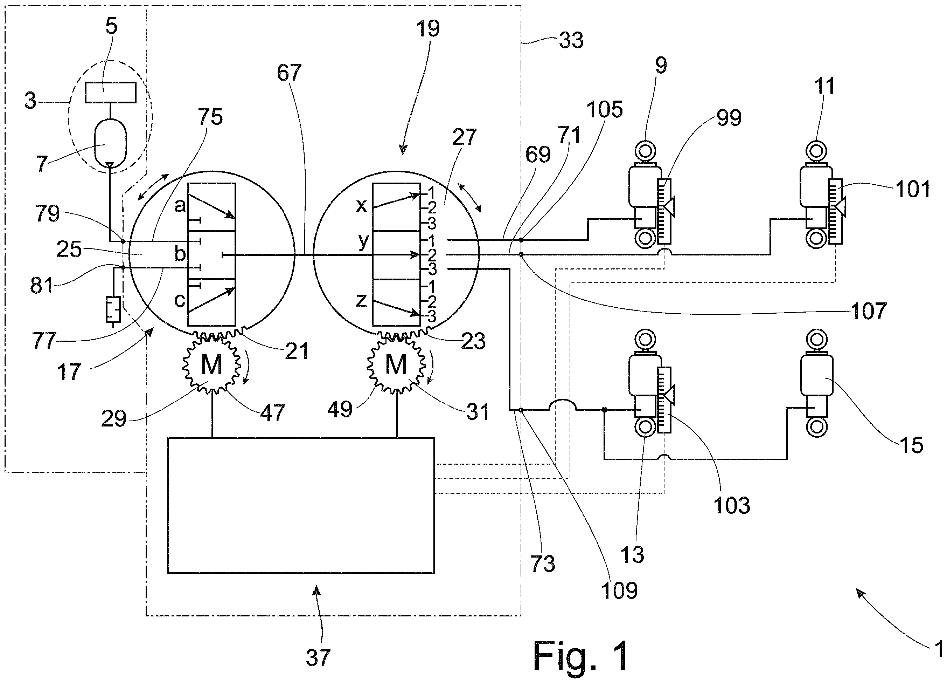

Die Figur 1 zeigt ein Ersatzschaubild eines beispielhaften Niveauregulierungssystems 1 mit einer Druckmittelversorgungseinrichtung 3, die in dieser Ausführungsform ein Druckerzeugungsaggregat 5 in Form eines Kompressors in Kombination mit einem Speicher 7 umfasst. Grundsätzlich wäre auch eine hydraulische Druckmittelversorgungseinrichtung denkbar.

Die Druckmittelversorgungseinrichtung 3 ist in Richtung einer Mehrzahl von Stützaggregaten 9-15, beispielsweise Luftfedern, ein Versorgungsventil 17 nachgeschaltet. Funktional zwischen dem Versorgungsventil 17 und den Stützaggregaten 9-15 ist ein einziges Verteilerventil 19 als Teil der gesamten Ventilanordnung 17; 19, die nur das Versorgungsventil 17 und das Verteilerventil 19 umfasst, angeordnet. Mit dem Verteilerventil 19 lassen sich mindestens drei Stützaggregate selektiv ansteuern, um die Niveaulage, z.B. einer Fahrzeugkabine einzustellen.

Das Versorgungsventil 17 ist als ein 3/3-Wegeventil ausgeführt und verfügt über eine Sperrstellung "b" in Richtung des Verteilerventils 19. Darüber lassen sich alle weiteren Strömungsverbindungen zu den Stützaggregaten 9-15 blockieren.

In einer Ablass-Stellung "c" kann das Druckmittel für sämtliche Stützaggregate 9-15 abgeführt werden. Bei einer Druckmittelversorgung mit Druckluft tritt die abgelassene Luft ins Freie aus.

Das Verteilerventil 19 weist eine Mehrzahl von Durchlass-Stellungen "x", "y", "z" auf, in der jeweils ein Strömungskanal wechselseitig durchströmbar ist und in der Anschlüsse "1"; "2"; "3" zu den weiteren Stützaggregaten 9-15 blockiert sind.

Das Verteilerventil 19 und auch das Versorgungsventil 17 sind als Drehschieberventile ausgeführt und werden elektromotorisch betätigt.

Stilisierte Übertragungsprofile 21; 23 an Ventilträgern 25; 27 und Elektromotoren 29; 31 soll die Drehschieberbauform darstellen.

Ein durch eine strichpunktierte Linie symbolisiertes Gehäuse 33 nimmt die Druckmittelversorgungseinrichtung 3 zumindest soweit auf, dass die beiden getrennt schaltbaren Versorgungsventil 17 und das Verteilerventil 19 in dem gemeinsamen Gehäuse 33 angeordnet sind.

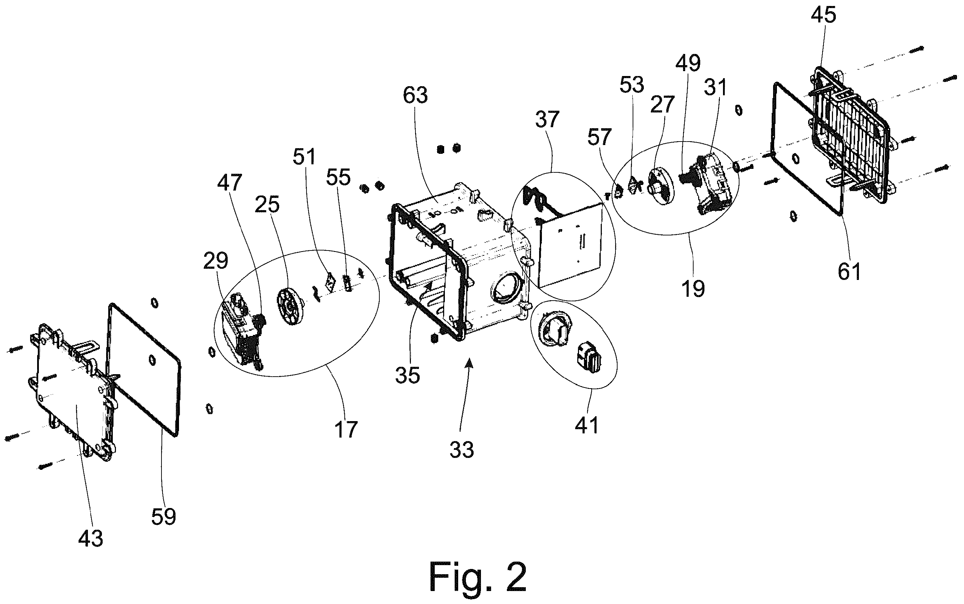

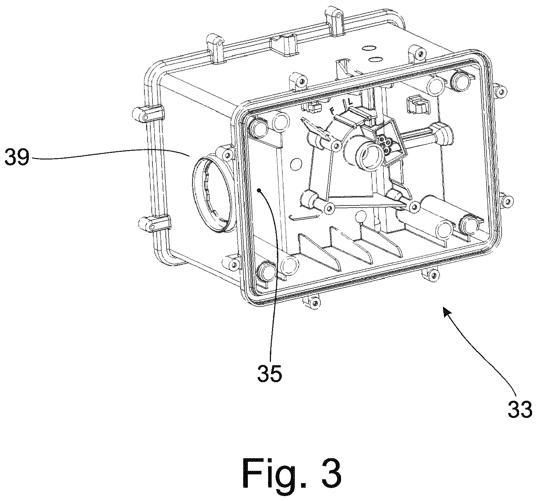

Die Figur 2 zeigt das Gehäuse 33 mit den darin verbauten Komponenten in einer Explosionsdarstellung. Neben den beiden Ventilen 17; 19 kann das Gehäuse 33 auch eine Aufnahme 35 für ein Steuergerät 37 aufweisen. In der Figur 3 ist die Aufnahme 35 deutlich erkennbar. In einer äußeren Wandung 39 ist ein elektrischer Anschluss 41 befestigt, über den eine Verbindung zwischen einem Bordnetz eines Fahrzeugs und dem Steuergerät 37, hier symbolisiert durch eine Platine mit Anschlusssteckern, geschlossen wird. (Fig.2)

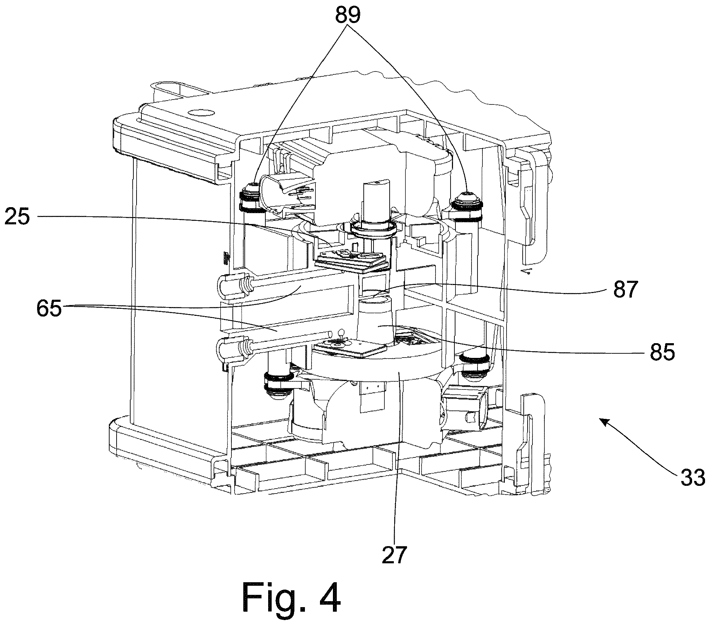

Aus der Fig. 2 ist des Weiteren ersichtlich, dass das Gehäuse 33 zwei endseitige Deckel 43; 45 aufweist, über die das Gehäuse 33 an einem Fahrzeug fixierbar ist. Von zwei Seiten ist jeweils der E-Motor 29; 31 montierbar, der über ein Keilprofil 47; 49 in das Übertragungsprofil 21; 23 des jeweiligen Ventilträgers 25; 27 eingreift. Beide Ventilträger 25; 27 nehmen Ventilscheiben 51; 53 auf, die mit einer weiteren Ventilscheibe 55; 57 als Teil eines Wandungsbereichs (s. Fig. 4) ein Schieberventil in der Funktion des Versorgungsventils 17 und des Verteilerventils 19 bilden. Damit in das Gehäuse 33 keine Feuchtigkeit eindringen kann, werden Dichtungsringe 59; 61 zwischen einem Gehäusering 63 und den Deckeln 43; 45 verspannt.

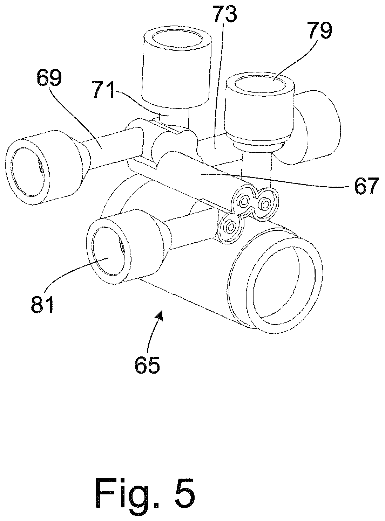

Die Figur 4 zeigt das Gehäuse 33 mit einem Freischnitt im Bereich des Versorgungsventils 17 und des Verteilerventils 19. Dabei sind auch Wandstrukturen 65 geschnitten dargestellt, in denen mindestens eine Verbindungsleitung zwischen den beiden Ventilen 17; 19 verlaufen (Fig. 1). In diesem Zusammenhang wird auf die Fig. 5 verwiesen, die die Verbindungsleitung 67 zwischen den Ventilen 17; 19 ohne die angrenzenden Wandstrukturen zeigt. In einer Wandungsebene sind Verbindungsleitungen 69; 71; 73 zu den Stützaggregaten 9 - 13 und in einer weiteren Wandungsebene Verbindungsleitungen 75; 77 zu einem Einlass- und einem Auslass-Anschluss angeordnet. Im Kontenpunkt des Einlass- und des Auslass-Anschlusses ist innerhalb der Wandung die Ventilscheibe 57 fixiert, die mit der über den Ventilträger 27 verdrehbaren Ventilscheibe 53 zusammenwirkt.

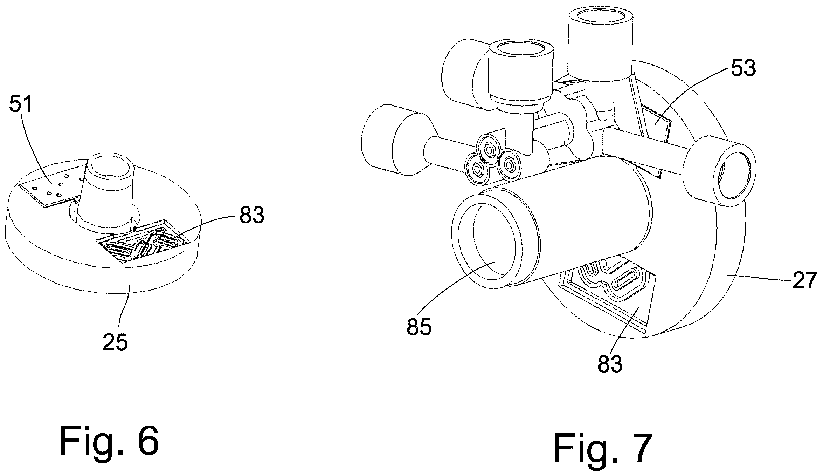

Die Ventilträger 25; 27 verfügen bevorzugt über zwei Schaltbereiche zur Aufnahme von jeweils einer Ventilscheibe 51, die für das Versorgungsventil 17 und eine Ventilscheibe 53, die für das Verteilerventil 19 vorgesehen ist. (Fig. 6). Deshalb kann der Ventilträger 25; 27 als ein Standardbauteil für beide Ventile 17; 19 eingesetzt werden.

In der Zusammenschau der Figuren 4 und 7 ist ein Achsträger 85als Teil des Gehäuses 33 offenbart. Der Achsträger 85 ist als ein Rohrkörper mit einer Stützwand 87 ausgeführt, in dem die Ventilträger 25; 27 der schaltbaren Ventile 17; 19 axial und radial geführt sind. Die beiden Ventilträger 25; 27 sind spiegelbildlich zu der Stützwand 87 angeordnet. Erkennbar sind auch Befestigungsaugen 89 an den E-Motoren, über die eine Drehmomentabstützung am Gehäuse 33 erfolgt.

In der Fig. 6 ist der Ventilträger 25 dargestellt, wobei ein Schaltbereich 83 offen ist, der eine zickzack-förmige Dichtungsaufnahme aufweist. Dieser Schaltbereich wirkt mit der Ventilscheibe 53 für das Verteilerventil 19 zusammen. Der Schaltbereich für das Versorgungsventil 17 weist ein Winkelprofil auf. (Fig. 7)

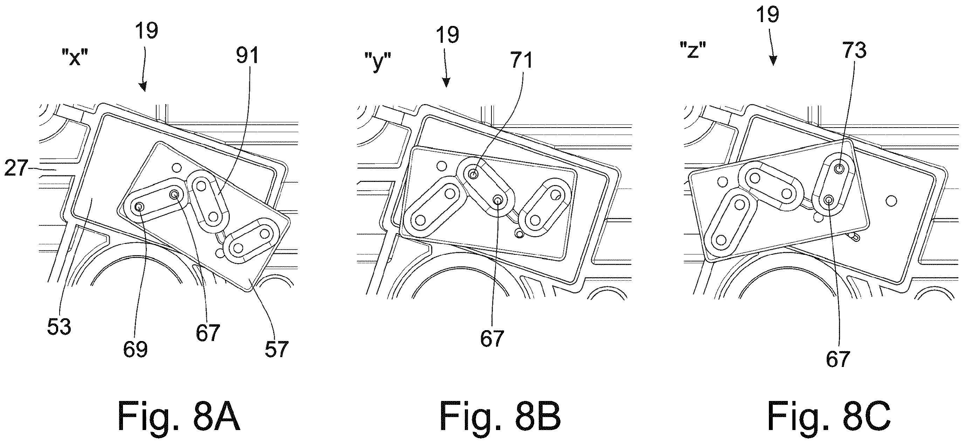

Mit der Figurenreihe 8A - 8C soll das Schaltbild der beiden Ventilscheiben 53; 57 des Verteilerventils 19 verdeutlicht werden. In der Fig. 8A ist die Verbindungsleitung 67 zum Versorgungsventil 17 und die Verbindungsleitung 69 zum Stützaggregat 9 über einen Dichtungsring 91 miteinander verbunden entsprechend der Schaltstellung "X". Alle anderen Verbindungsleitungen in dem Drehschieberventil 19 sind verschlossen. Folglich kann Druckmittel zum Stützaggregat 9 zugeführt oder abgelassen werden.

In der Fig. 8b ist die Verbindungsleitung 67 zum Versorgungsventil 17 wiederum geöffnet, jedoch die Verbindungsleitung 71 für das Stützaggregat 11 verbunden. Dafür ist die Ventilscheibe 53 im Ventilträger zur Ventilscheibe 57 in der Gehäusewandung rotatorisch verschoben. Die Fig. 8C zeigt wiederum die Verbindungsleitung 67, jedoch verbunden mit der Verbindungsleitung 73 für die Kombination der Stützaggregate 13; 15.

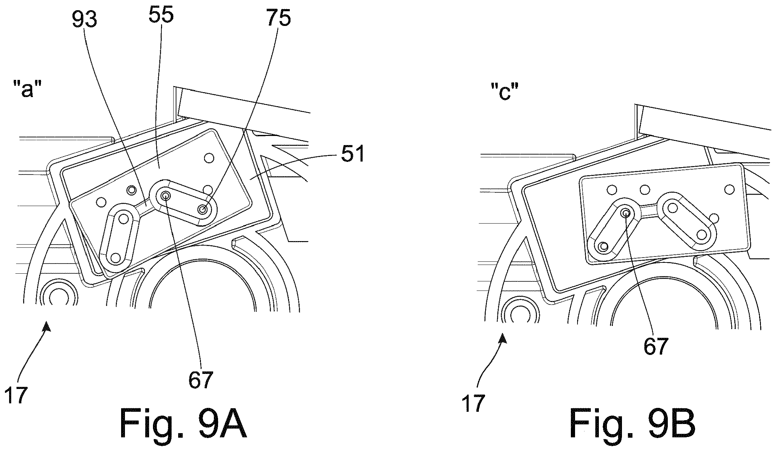

Die Figurenfolge 9A und 9b soll die Drehschieberfunktion des Versorgungsventils 17 verdeutlichen. In der Fig. 9A ist die Verbindungsleitung 67 in Richtung des Verteilerventils mit der Verbindungsleitung 75 zur Druckmittelversorgungseinrichtung über einen von einem Ringbereich des Dichtungsrings 93 begrenzten Sammelraum entsprechend der Schaltstellung "a" verbunden. In der Fig. 9b hat sich die Position der Ventilscheiben 51; 55 über eine Verdrehbewegung derart verändert, dass nun die Verbindungsleitung 67 zum Verteilerventil 19 mit der Verbindungsleitung 77 zum Druckmittelablass verbunden. In dieser Figurenfolge kann man die beiden Ringbereiche erkennen, deren Hauptachse einen Winkel bilden.

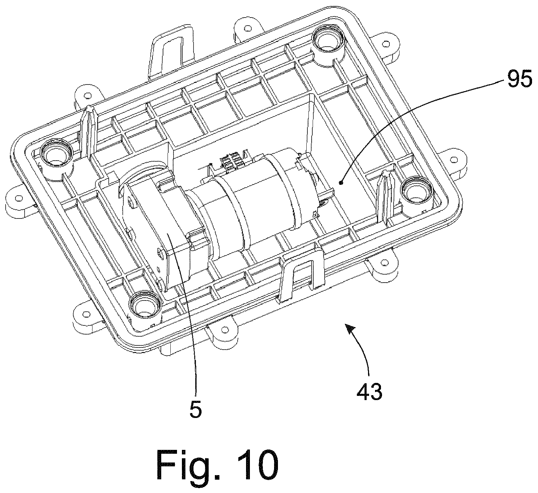

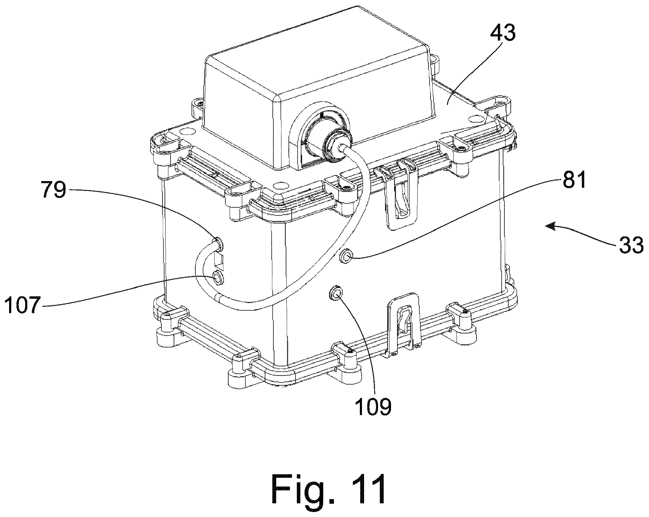

Die Figuren 10 und 11 beschreiben eine weitere Ausbaustufe des Gehäuses 33, das nun eine Aufnahme 95 für das Druckerzeugungsaggregat 5 aufweist. Das Druckerzeugungsaggregat für eine Fahrzeugkabine kann relativ kompakt dimensioniert werden. Um ein möglichst weitgehend standardisiertes Gehäuse 33 verwenden zu können, ist die Aufnahme 95 als Vertiefung für das Druckerzeugungsaggregat im Deckel 43 ausgeführt. Die Aufnahme 95 weist einen Verbindungskanal 97 zu dem Druckmitteleinlassanschluss 79 aus. Der Verbindungskanal 97 ist bevorzugt als ein Druckschlauch ausgeführt, der auch extern verlaufen kann. Auch diese Maßnahme dient der einfachen Bauweise des gesamten Gehäuses.

Bei der Montage des Gesamtsystems werden die Stützaggregate inklusive Sensorik zur Niveauerfassung 99 - 103 montiert, beispielsweise zwischen einem Fahrzeugrahmen und einer Kabine. Danach wird das Gehäuse 33 mit dem bereits installierten Versorgungsventil 17 und dem Verteilerventil 19 an dem Fahrzeug befestigt. Ggf. kann im Gehäuse 33 auch das Druckerzeugungsaggregat 5 montiert sein. Die Verbindungen 67, 75; 77 zwischen beiden Ventilen sind bereits innerhalb der Wandungsbereiche vorhanden. Nach der Gehäusemontage werden die Stützaggregate 9-15 über die Leitungen 69 - 73 mit den Anschlussöffnungen in äußeren Wandbereichen des Gehäuses 33 verbunden. Des Weiteren besteht eine Signalverbindung zwischen den Sensoren 99 - 103 und dem Gehäuse 33 bzw. dem Steuergerät 37 und der elektrischen Leistungsversorgung 41 für das Steuergerät sowie für die E-Motoren.

**Bezugszeichen**

| | | | |
|---|---|---|---|
| 1 | Niveauregulierungseinrichtung | 63 | Gehäusering |
| 3 | Druckmittelversorgungseinrichtung | 65 | Wandstruktur |
| 5 | Druckerzeugungsaggregat | 67 | Verbindungsleitung |
| 7 | Speicher | 69 | Verbindungsleitung |
| 9 | Stützaggregat | 71 | Verbindungsleitung |
| 11 | Stützaggregat | 73 | Verbindungsleitung |
| 13 | Stützaggregat | 75 | Verbindungsleitung |
| 15 | Stützaggregat | 77 | Verbindungsleitung |
| 17 | Versorgungsventil | 79 | Einlass-Anschluss |
| 19 | Verteilerventil | 81 | Auslass-Anschluss |
| 21 | Übertragungsprofil | 83 | Schaltbereich |
| 23 | Übertragungsprofil | 85 | Achsträger |
| 25 | Ventilträger | 87 | Stützwand |
| 27 | Ventilträger | 89 | Befestigungsauge |
| 29 | Elektromotor | 91 | Dichtungsring |
| 31 | Elektromotor | 93 | Dichtungsring |
| 33 | Gehäuse | 95 | Aufnahme |
| 35 | Aufnahme | 97 | Verbindungskanal |
| 37 | Steuergerät | 99 | Sensorik |
| 39 | äußere Wandung | 101 | Sensorik |
| 41 | elektrischer Anschluss | 103 | Sensorik |
| 43 | Deckel | 105 | Anschlussöffnungen |
| 45 | Deckel | 107 | Anschlussöffnungen |
| 47 | Keilprofil | 109 | Anschlussöffnungen |
| 49 | Keilprofil | | |
| 51 | Ventilscheiben | | |
| 53 | Ventilscheiben | | |
| 55 | Ventilscheiben | | |
| 57 | Ventilscheiben | | |
| 59 | Dichtungsringe | | |
| 61 | Dichtungsringe | | |

## Patentansprüche

1. Druckmittelversorgungseinrichtung (3), umfassend eine Anzahl von Ventilen (17; 19), die über Verbindungsleitungen (67 - 77) in die Druckmittelversorgungseinrichtung (3) eingebunden sind, **dadurch gekennzeichnet, dass** mindestens zwei getrennt schaltbare Ventile (17; 19) in einem gemeinsamen Gehäuse (33) angeordnet sind.

2. Druckmittelversorgungseinrichtung nach Anspruch 1, **dadurch gekennzeichnet, dass** mindestens eine Verbindungsleitung (67) zwischen den Ventilen (17; 19) innerhalb einer Wandstruktur (65) des Gehäuses (33) verläuft.

3. Druckmittelversorgungseinrichtung nach Anspruch 1, **dadurch gekennzeichnet, dass** das Gehäuse (33) eine Aufnahme (95) für ein Steuergerät (37) aufweist.

4. Druckmittelversorgungseinrichtung nach Anspruch 1, **dadurch gekennzeichnet, dass** mindestens ein Ventil (17; 19) als ein Drehschieberventil ausgeführt ist und das Gehäuse (33) einen Achsträger (85) für das Drehschieberventil (17; 19) aufweist.

5. Druckmittelversorgungseinrichtung nach Anspruch 4, **dadurch gekennzeichnet, dass** zwei Drehschieberventile (17; 19) einen gemeinsamen Achsträger (85) aufweisen.

6. Druckmittelversorgungseinrichtung nach Anspruch 5, **dadurch gekennzeichnet, dass** der Achsträger (85) Ventilträger (25; 27) der schaltbaren Ventile (17; 19) lagert.

7. Druckmittelversorgungseinrichtung nach Anspruch 6, **dadurch gekennzeichnet, dass** der Ventilträger (25; 27) mehrere Schaltbereiche (83) für verschiedene Ventile (17; 19) aufweist.

8. Druckmittelversorgungseinrichtung nach Anspruch 4, **dadurch gekennzeichnet, dass** mindestens ein Wandungsbereich des Gehäuses (33) mit dem Ventilträger (25; 27) das Schieberventil (17; 19) bilden.

9. Druckmittelversorgungseinrichtung nach Anspruch 6, **dadurch gekennzeichnet, dass** der Ventilträger (25; 27) ein Anschlussprofil (47; 49) für einen E-Motor (29; 31) aufweist.

10. Druckmittelversorgungseinrichtung nach Anspruch 1, **dadurch gekennzeichnet, dass** das Gehäuse (33) eine Aufnahme (95) für ein Druckerzeugungsaggregat (5) aufweist.

11. Druckmittelversorgungseinrichtung nach Anspruch 10, **dadurch gekennzeichnet, dass** die Aufnahme (95) einen Verbindungskanal (97) zu einem Druckmitteleingangsanschluss (79) des Gehäuses (33) aufweist.

12. Druckmittelversorgungseinrichtung nach Anspruch 1, **dadurch gekennzeichnet, dass** das Gehäuse (33) zwei endseitige Deckel (43; 45) aufweist.

13. Druckmittelversorgungseinrichtung nach Anspruch 11, dass die Aufnahme (95) für das Druckerzeugungsaggregat (5) im Deckel (43) ausgeführt ist.
